# EUROPÄISCHE PATENTSCHRIFT

(11) **EP 1 620 286 B1**
(45) Veröffentlichungstag und Bekanntmachung des Hinweises auf die Patenterteilung: **14.03.2007**
(21) Anmeldenummer: 03816862.1
(22) Anmeldetag: 29.10.2003
(51) Int. Cl.: B60K 6/04

(54) **ANTRIEBSSTRANG MIT EINER BRENNKRAFTMASCHINE UND ZWEI ELEKTRISCHEN ANTRIEBSAGGREGATEN**
DRIVE TRAIN WITH AN INTERNAL COMBUSTION ENGINE AND TWO ELECTRICAL DRIVE UNITS
ENSEMBLE TRANSMISSION COMPRENANT UN MOTEUR A COMBUSTION INTERNE ET DEUX MODULES DE TRANSMISSION ELECTRIQUES

(30) Priorität: 03.05.2003 DE 10319880
(43) Veröffentlichungstag der Anmeldung: 01.02.2006
(73) Patentinhaber: DaimlerChrysler AG, 70567 Stuttgart (DE)
(72) Erfinder: LANG, Jürgen, 71522 Backnang (DE); RIEDL, Klaus, 72074 Tübingen (DE)
(86) Internationale Anmeldenummer: PCT/EP2003/011980
(87) Internationale Veröffentlichungsnummer: WO 2004/098936

(56) Entgegenhaltungen:
- DE-A- 4 124 479
- DE-A- 19 606 771
- DE-C- 19 910 299

## Beschreibung

Die Erfindung betrifft einen Antriebsstrang gemäß ausgewählten Merkmalen des Anspruchs 1.

Aus der Druckschrift DE 196 06 771 C2 ist ein Hybridantrieb für Kraftfahrzeuge bekannt, welcher über eine Brennkraftmaschine sowie zwei elektrische Antriebsaggregate verfügt. Zwischen einer Motorwelle der Brennkraftmaschine und einem Abtriebselement, hier eine Abtriebswelle, ist ein erster Leistungszweig vorgesehen, über welchen das Antriebsmoment der Brennkraftmaschine läuft. Über eine Kupplung ist die Motorwelle unmittelbar mit der Abtriebswelle koppelbar. Das erste elektrische Antriebsaggregat steht in Leistungsaustausch mit dem ersten Leistungszweig derart, dass dem Antriebsmoment der Brennkraftmaschine das Antriebsmoment des ersten elektrischen Antriebsaggregates überlagerbar ist. Der zweite Leistungszweig wird von dem zweiten elektrischen Antriebsaggregat betrieben. Eine Überlagerung der Leistungen des ersten Leistungszweiges und des zweiten Leistungszweiges, also der Leistung der Brennkraftmaschine sowie ggf. der Leistung des ersten elektrischen Antriebsaggregates mit der Leistung des zweiten Antriebsaggregates, erfolgt über ein Summengetriebe, hier ein Planetengetriebe. Hierbei ist gemäß dem Stand der Technik ein Sonnenrad des Summengetriebes mit der Motorwelle verbunden, während über zwei Kupplungen des zweiten Leistungszweiges das Moment des zweiten elektrischen Antriebsaggregates wahlweise auf zwei Hohlräder des Summengetriebes mit unterschiedlichen Durchmessern übergebbar ist. Zwischen die Kupplungen und die Hohlräder ist ein Übersetzungsgetriebe zwischengeschaltet.

Weitere bekannte Hybridantriebe sind beispielsweise aus den Druckschriften DE 41 24 479 C2, WO 94/19856 und DE 199 16 489 C2 bekannt.

Der vorliegenden Erfindung liegt die Aufgabe zugrunde, einen Antriebsstrang vorzuschlagen, welcher unterschiedliche Betriebsarten ermöglicht.

Die der Erfindung zugrundeliegende Aufgabe wird dadurch gelöst, dass der Antriebsstrang über ein Getriebe verfügt, welches für eine erste Betriebsart über zumindest fünf Getriebestufen verfügt, welche mittels mehrerer Planetensätze realisiert sind. Hierbei handelt es beispielsweise in der ersten Betriebsart im wesentlichen um ein Automatikgetriebe. Des weiteren verfügt der Antriebsstrang über ein Antriebsaggregat, welches über eine Eingangswelle und das Getriebe mit einer Ausgangswelle in Antriebsverbindung steht. Bei diesem Antriebsaggregat handelt es sich beispielsweise um eine Brennkraftmaschine. Zusätzlich zu diesem Antriebsaggregat ist ein zusätzliches elektrisches Antriebsaggregat vorgesehen, welches im folgenden auch als zweites elektrisches Antriebsaggregat bezeichnet ist. Das Getriebe verfügt über ein Summengetriebe. Das Summengetriebe ist in der ersten Betriebsart in den Kraftfluss zwischen Eingangswelle E und Ausgangswelle A zwischengeschaltet ist. In einer zweiten Betriebsart erfolgt in dem Summengetriebe eine Überlagerung der Antriebsbewegung des Antriebsaggregates und des zweiten elektrischen Antriebsaggregates. Infolge dieser Überlagerung ist mit dem Summengetriebe eine stufenlose Übersetzung der Antriebsbewegung der Eingangswelle zu einem Abtriebelement bzw. zwei Abtriebselementen des Summengetriebes gebildet (bzw. der Antriebsbewegung des zusätzlichen Antriebsaggregates zu dem Abtriebselement des Summengetriebes).

Das Getriebe verfügt über ein zweites Teilgetriebe. Das zweite Teilgetriebe ist in der ersten Betriebsart in den Kraftfluss zwischen Eingangswelle E und Ausgangswelle A zwischengeschaltet und ist somit insbesondere Teil des Kraftflusses für den Betrieb als Automatikgetriebe. Das Teilgetriebe verfügt über zumindest zwei Fahrbereiche. In diesen zwei Fahrbereichen erfolgt in der zweiten Betriebsart eine Übergabe der Antriebsbewegung des Abtriebselementes an die Ausgangswelle.

Somit ist erfindungsgemäß beispielsweise ein Betrieb des Antriebsstranges in der ersten Betriebsart als Automatikgetriebe mit mindestens 5 Gängen ermöglicht sowie zusätzlich als stufenloses Getriebe in einem ersten Fahrbereich sowie als stufenloses Getriebe in einem zweiten Fahrbereich. Diese unterschiedlichen Betriebsarten sind auf einfache Weise und unter Nutzung gemeinsamer Bauteile nutzbar. Die Möglichkeit der Nutzung der unterschiedlichen vorgenannten alternativen Betriebsarten ermöglicht eine Optimierung des Betriebes des Antriebsstranges, beispielsweise hinsichtlich des Leistungsbedarfes, der Bauteilbeanspruchung, der Verbrauchwerte und/oder der Emissionswerte.

Gemäß einer Weiterbildung der Erfindung finden zur Herstellung der Antriebsverbindung in der ersten und zweiten Betriebsart gemeinsame Schaltelemente Einsatz. Hiermit ist eine Minimierung des Bauraumbedarfes sowie des Bauteilbedarfes verbunden.

Nach einem weiteren Vorschlag der Erfindung erfolgt eine Umschaltung zwischen dem ersten Fahrbereich und dem zweiten Fahrbereich ohne Beschleunigung oder Verzögerung der trägen Massen. Dies hat eine Erhöhung des Fahrkomforts und/oder eine Minimierung eines Synchronisieraufwandes zur Folge.

Vorzugsweise ist dem Antriebsstrang ein Steuergerät zugeordnet ist, welches eine Fahrstrategie beinhaltet, welche eine Ansteuerung der Schaltelemente und der Antriebsaggregate ermöglicht zur Auswahl einer Betriebsart. Durch eine geeignete Fahrstrategie können die unterschiedlichen Betriebsarten gezielt eingesetzt werden.

Das Steuergerät berücksichtigt hierbei gemäß weiteren Ausgestaltungen der Erfindung zur Auswahl einer Betriebsart zumindest einen Ladezustand einer Batterie, einen Umgebungsparameter, einen Fahrzeugparameter, eine Bewegungsgröße des Fahrzeuges, eine von einem Fahrer abhängige Größe und/oder einen Emissiönsparameter.

Bei einem weiteren erfindungsgemäßen Antriebsstrang ist ein weiteres elektrisches Antriebsaggregat (im folgenden auch erstes elektrisches Antriebsaggregat) vorgesehen, mittels dessen eine unmittelbare Einspeisung eines Antriebsmomentes in eine Motorwelle oder die Eingangswelle möglich ist. Hierdurch kann eine Ergänzung der Antriebsleistung des Antriebsaggregates erfolgen. Weiterhin kann das weitere elektrische Antriebsaggregat zum Starten eines als Brennkraftmaschine ausgebildeten Antriebsaggregates genutzt werden. Eine weitere hierdurch ermöglichte Betriebsart ist der Antrieb ausschließlich über das erste elektrische Antriebsaggregat oder in Kombination desselben mit dem zweiten elektrischen Antriebsaggregat, insbesondere unter stufenloser Übersetzung.

Vorteilhafte Weiterbildungen ergeben sich aus den Unteransprüchen, der Beschreibung und den Zeichnungen.

Bevorzugte Ausführungsbeispiele der erfindungsgemäßen Antriebsstränge sowie Teilgruppen einer Gruppe von Antriebssträngen werden nachfolgend anhand der Zeichnung näher erläutert. Die Zeichnung zeigt:
- Fig. 1: einen Antriebsstrang gemäß einer zweiten Teilgruppe der Gruppe von Antriebssträngen mit einem Teilgetriebe, welches als Automatikgetriebe ausgebildet ist, mit hydrodynamischem Drehmomentwandler,
- Fig. 2: eine Tabelle für die in den einzelnen Gängen des Getriebes von Figur 1 wirksamen Schaltmittel (Kupplungen/Bremsen),
- Fig. 3: eine weitere Ausführungsform eines Antriebsstranges einer zweiten Teilgruppe der Gruppe von Antriebssträngen mit einem Teilgetriebe, welches als Automatikgetriebe ausgebildet ist, und vorgeschaltetem hydrodynamischen Drehmomentwandler,
- Fig. 4: eine Tabelle für die in den einzelnen Gängen des Getriebes gemäß Figur 3 wirksamen Schaltmittel (Kupplungen/Bremsen),
- Fig. 5: einen Antriebsstrang einer ersten Teilgruppe von einer Gruppe von Antriebssträngen mit einem Teilgetriebe, welches als Automatikgetriebe ausgebildet ist, sowie vorgeschaltetem Hybridsatz,
- Fig. 6: einen Antriebsstrang gemäß einer ersten Teilgruppe einer Gruppe von Antriebssträngen mit einem Teilgetriebe, welches als Automatikgetriebe ausgebildet ist, sowie einem vorgeschalteten Hybridsatz und
- Fig. 7: eine detaillierte Ausgestaltung eines Teilbereiches des Teilgetriebes sowie des vorgeschalteten Hybridsatzes gemäß Figur 5 oder Figur 6.

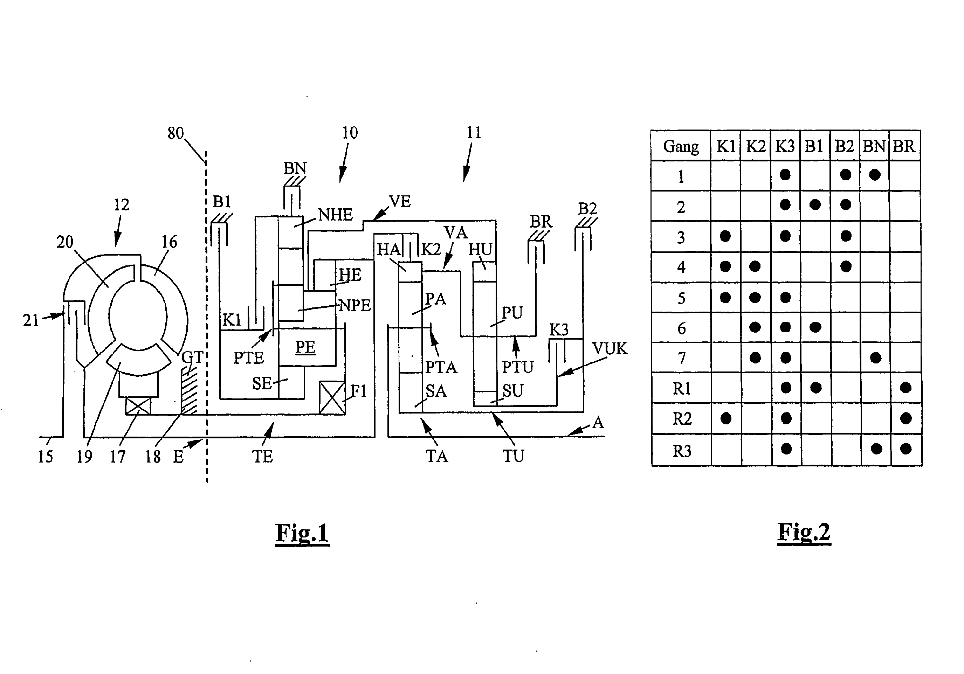

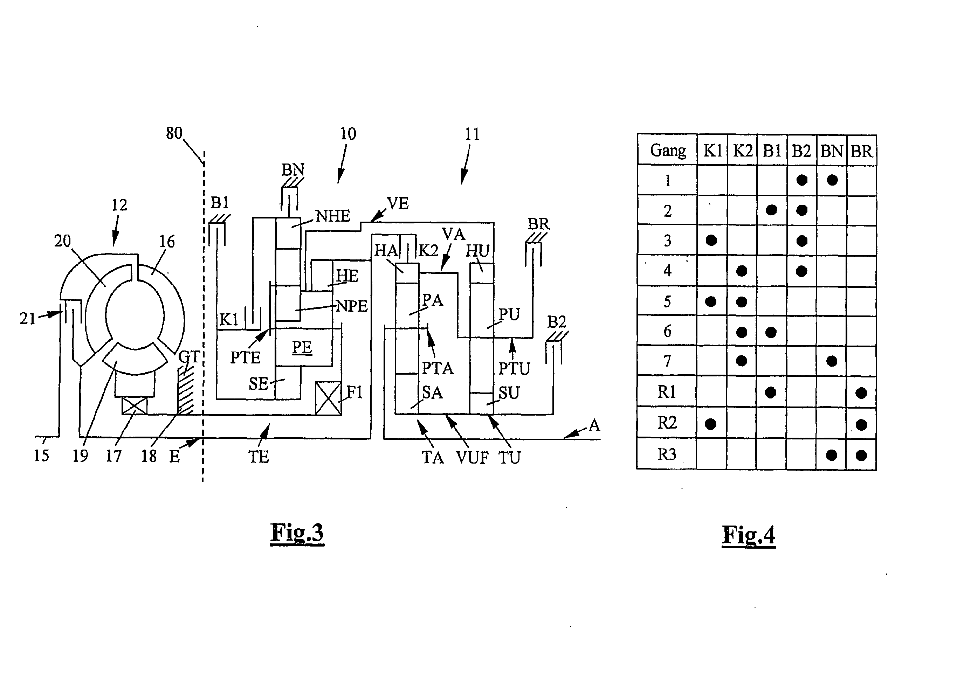

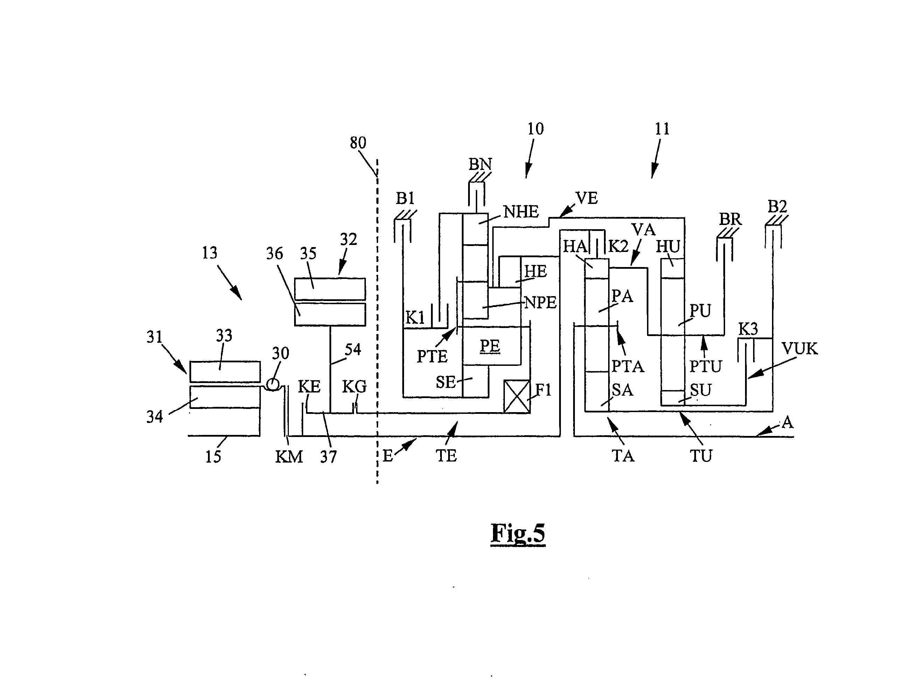

Antriebsstränge 10 verfügen über ein Teilgetriebe 11, welches als Automatikgetriebe ausgebildet ist, sowie eine dem Teilgetriebe 11 vorgeschaltete Getriebekomponente. Die Getriebekomponente ist gemäß den Figuren 1 und 3 mit einem hydrodynamischen Drehmomentwandler 12 ausgebildet, während gemäß den Figuren 5, 6 und 7 als Getriebekomponente ein Hybridsatz 13 vorgesehen ist. Der Kraftfluss zwischen Teilgetriebe 11 und der Getriebekomponente 12, 13 erfolgt mit Hilfe einer Eingangswelle E.

### Zur Funktion des Teilgetriebes 11

Ein eingangsseitiges Planetenräder-Teilgetriebe TE weist einen Planetenräder PE drehbar lagernden Planetenträger PTE auf. Mit den Planetenrädern PE kämmt ein äußeres Zentralrad HE, welches eine drehfeste Verbindung zu der Eingangswelle E aufweist. Mit den Planetenrädern PE kämmt ferner ein inneres Zentralrad SE, welches mit einer ein- und ausrückbaren reibschlüssigen Bremse B1 und mit einer ein- und ausrückbaren Kupplung K1 verbunden ist. Gemäß den Ausgestaltungen nach Figuren 1 und 3, ggf. ergänzend zu den Figuren 5, 6 und 7, ist zwischen dem Planetenträger PTE und einem nicht drehenden Gehäuseteil GT wirkungsmäßig eine Freilaufkupplung F1 angeordnet, welche bei einem zum Drehsinn der Eingangswelle E gegenläufigen Drehsinn des Planetenträgers PTE einrückt. (Auf eine Umsetzung der Freilaufkupplung kann gemäß einer alternativen Ausgestaltung des Antriebsstranges verzichtet werden.) Ein ausgangsseitiges Planetenräder-Teilgetriebe TA weist einen Planetenräder PA drehbar lagernden Planetenträger PTA auf, welcher mit einer drehfesten Antriebsverbindung zu einer Ausgangswelle A versehen ist. Mit den Planetenrädern PA kämmt ein äußeres Zentralrad HA, welches durch eine ein- und ausrückbare reibschlüssige Kupplung K2 mit der Eingangswelle E verbunden ist. Mit den Planetenrädern PA kämmt ferner ein inneres Zentralrad SA, welches mit einer ein- und ausrückbaren Bremse B2 verbunden ist.

Ein Planetenräder-Umkehr-Teilgetriebe TU weist einen Planetenräder PU drehbar lagernden Planetenträger PTU auf, welcher mit einer ein- und ausrückbaren reibschlüssigen Bremse BR verbunden sowie mit einer drehfesten Antriebsverbindung VA zum äußeren Zentralrad HA des ausgangsseitigen Teilgetriebes TA versehen ist. Mit den Planetenrädern PU kämmt ein äußeres Zentralrad HU, welches eine Antriebsverbindung VE mit dem Planetenträger PTE des eingangsseitigen Teilgetriebes TE aufweist. Mit den Planetenrädern PU kämmt ferner ein inneres Zentralrad SU.

Gemäß den Ausführungsformen nach Figur 1 und Figur 5 ist zwischen den beiden inneren Zentralrädern SA und SU eine Antriebsverbindung VUK vorgesehen, welche durch Vermittlung einer ein- und ausrückbaren reibschlüssigen Kupplung K3 lösbar ausgebildet ist.

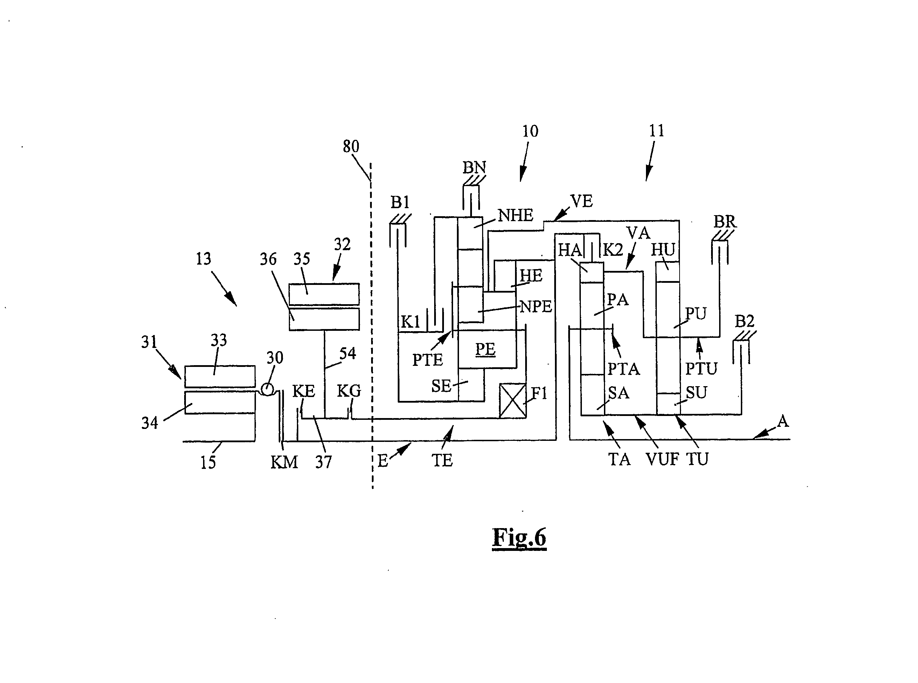

Gemäß den Ausführungsformen nach Figur 3 und Figur 6 ist zwischen den beiden inneren Zentralrädern SA und SU eine Antriebsverbindung VUF wirksam, welche ständig drehfest ausgebildet ist.

Sämtliche Ausführungsformen haben gemeinsam, dass auf dem Planetenträger PTE zusätzlich Neben-Planetenräder NPE drehbar gelagert sind, welche sowohl mit den Planetenrädern PE als auch mit einem äußeren Neben-Zentralrad NHE kämmen, welches mit einer ein- und ausrückbaren reibschlüssigen Bremse BN verbunden ist.

### Getriebezustand 1. Gang

Für die Ausführungsformen gemäß Figur 1 und Figur 5 ist der Getriebezustand so, dass gemäß der Tabelle der Figur 2 die Bremse B2 sowie die Kupplung K3 eingerückt und dadurch beide Teilgetriebe TA und TU in eine Standübersetzung mit festgebremstem Reaktionsglied - Zentralräder SA und SU - sowie im Kraftfluss in Reihe geschaltet sind. Dies gilt zwar auch für das eingangsseitige Teilgetriebe TE, jedoch ist bei diesem die Standübersetzung bei festgebremstem Neben-Zentralrad NE geschaltet, welche höher ist als diejenige bei festgebremstem Zentralrad SE.

Entsprechend ist für die Ausführungsformen gemäß Figur 3 und Figur 6 ebenfalls das Neben-Zentralrad NHE durch die Bremse BN sowie die Zentralräder SA und SU durch die Bremse B2 festgebremst und die drei Teilgetriebe TE, TA und TU sind im Kraftfluss in Reihe geschaltet.

### Getriebezustand 2. Gang

Gemäß der Tabelle in Figur 2 sind alle drei Teilgetriebe TE, TA und TU in ihre Standübersetzung bei festgebremstem Reaktionsglied - Zentralräder SE, SA und SU - sowie in Bezug auf den Kraftfluss in Reihe geschaltet, so dass sich hier die Gangübersetzung für den 2. Gang durch multiplikative Verknüpfung dieser drei Teilübersetzungen ergibt.

Für die Ausführungsformen gemäß Figur 3 und Figur 6 sind gemäß der Tabelle in Figur 4 alle drei Teilgetriebe TE, TA und TU in ihre Standübersetzung bei festgebremstem Reaktionsglied - Zentralräder SE, SA und SU - sowie in Bezug auf den Kraftfluss in Reihe geschaltet, so dass sich auch hier die Gangübersetzung für den 2. Gang durch multiplikative Verknüpfung dieser drei Teilübersetzungen ergibt.

### Getriebezustand 3. Gang

Gemäß den Ausführungsformen nach Figur 1 und Figur 5 ist das eingangsseitige Teilgetriebe TE durch die Kupplung K1 in seine Teilübersetzung 1:1 und im Kraftfluss in Reihe zu den Teilgetrieben TA und TU geschaltet, welche durch den eingerückten Zustand der Bremse B2 und der Kupplung K3 jeweils in ihre Standübersetzung bei festgebremstem Reaktionsglied (Zentralrad SA bzw. SU) sowie im Kraftfluss in Reihe zueinander geschaltet sind. Demzufolge ergibt sich die Gangübersetzung in diesem Fall aus der multiplikativen Verknüpfung der Standübersetzungen der beiden Teilgetriebe TA und TU.

Gemäß den in den Figuren 3 und 6 dargestellten Ausführungsbeispielen sind aufgrund des jeweils eingerückten Zustandes der Kupplung K1 und der Bremse B2 gemäß der Tabelle in Figur 4 in Übereinstimmung mit dem Getriebezustand für die Figuren 1 und 5 das eingangsseitige Teilgetriebe TE in seine Teilübersetzung 1:1 und im Kraftfluss in Reihe zu den Teilgetrieben TA und TU geschaltet, welche durch die drehfeste Kopplung VUF der Zentralräder SA und SU in ihre jeweilige Standübersetzung bei festgebremstem Reaktionsglied sowie im Kraftfluss in Reihe zueinander geschaltet sind. Demzufolge ergibt sich auch hier die Getriebeübersetzung aus der multiplikativen Verknüpfung der Standübersetzungen der Teilgetriebe TA und TU.

### Getriebezustand 4. Gang

Für die Ausführungsformen gemäß Figur 1 und Figur 5 ergibt sich gemäß der Tabelle in Figur 2 durch den jeweils eingerückten Zustand der Kupplungen K1 und K2 und der Bremse B2, dass die Teilgetriebe TE und TU in ihre jeweilige Übersetzung 1:1 und das ausgangsseitige Teilgetriebe TA in seine Standübersetzung bei festgebremstem Reaktionsglied geschaltet sind, so dass sich die Gangübersetzung allein aus der Standübersetzung des ausgangsseitigen Teilgetriebes TA ergibt.

Für die Ausführungsformen gemäß Figur 3 und Figur 6 ergibt sich nach der Tabelle in Figur 4 infolge des jeweils eingerückten Zustandes der Kupplung K2 und der Bremse B2 und durch die Kopplung VUF der Zentralräder SA und SU, dass die Teilgetriebe TE und TU von der Kraftübertragung abgeschaltet und das ausgangsseitige Teilgetriebe TA in seine Standübersetzung bei festgebremstem Reaktionsglied geschaltet sind, so dass sich die Gangübersetzung allein aus der Standübersetzung des ausgangsseitigen Teilgetriebes TA ergibt.

### Getriebezustand 5. Gang

Für die Ausführungsformen gemäß Figur 1 und Figur 5 sind gemäß der Tabelle in Figur 2 die drei Kupplungen K1, K2 und K3 eingerückt, so dass alle drei Teilgetriebe TE, TA und TU als gemeinsamer Block umlaufen, mithin der 5. Gang als Direktgang ausgelegt ist.

Für die Ausführungsformen gemäß Figur 3 und Figur 6 sind nach der Tabelle in Figur 4 die beiden Kupplungen K1 und K3 eingerückt. Die Funktion der eingerückten Kupplung K3 nach Figur 1 übernimmt hier wieder die Koppelverbindung VUF, so dass auch in diesem Falle alle drei Teilgetriebe TE, TA und TU als gemeinsamer Block umlaufen und ein direkter Gang erhalten wird.

### Getriebezustand 6. Gang

Für die Ausführungsformen gemäß Figur 1 und Figur 5 sind nach der Tabelle in Figur 2 die Bremse B1 und die Kupplungen K2 und K3 eingerückt, wodurch alle drei Teilgetriebe TE, TA und TU zu einem Koppelgetriebe miteinander verbunden sind mit festgebremstem Zentralrad SE, welches den Antrieb ins Schnelle der gekuppelten Zentralräder SA und SU in höherem Maße und somit der Ausgangswelle A in einem geringeren Maße gegenüber der Eingangswelle E vermittelt.

Für die Ausführungsformen gemäß Figur 3 und Figur 6 sind durch den eingerückten Zustand der Bremse B1 und der Kupplung K2 nach der Tabelle in Figur 4 und durch die drehfeste Koppelverbindung VUF der Zentralräder SA und SU wiederum alle drei Teilgetriebe TE, TA und TU zu einem einzigen Koppelgetriebe verbunden, bei welchem das festgebremste Reaktionsglied SE den Antrieb der Zentralräder SA und SU in größerem Maße und der Ausgangswelle A in geringerem Maße jeweils ins Schnelle gegenüber der Eingangswelle E vermittelt.

### Getriebezustand 7. Gang

Für die Ausführungsformen gemäß Figur 1 und Figur 5 sind nach der Tabelle in Figur 2 die Bremse BN und die Kupplungen K2 und K3 eingerückt, so dass alle drei Teilgetriebe TE, TA und TU zu einem einzigen Koppelgetriebe verbunden sind, bei welchem das festgebremste Neben-Zentralrad NHE den Antrieb ins Schnelle in noch höherem Maße der drehfest gekoppelten Zentralräder SA und SU sowie in geringerem Maße der Ausgangswelle A jeweils gegenüber der Eingangswelle E vermittelt.

Für die Ausführungsformen gemäß Figur 3 und Figur 6 sind nach der Tabelle in Figur 4 die Bremse BN und die Kupplung K2 eingerückt. Die Funktion des eingerückten Zustandes der Kupplung K3 in den Figuren 1 und 5 übernimmt in diesem Falle die drehfeste Kopplung VUF der Zentralräder SA und SU, so dass auch hier alle drei Teilgetriebe TE, TA und TU zu einem gemeinsamen Koppelgetriebe miteinander verbunden sind, bei welchem das festgebremste Neben-Zentralrad NHE als Reaktionsglied den jeweiligen Antrieb ins Schnelle in noch höherem Maße der Zentralräder SA und SU sowie in geringerem Maße der Eingangswelle A gegenüber der Eingangswelle E vermittelt.

### Getriebezustand Rückwärtsgang R1

Für die Ausführungsformen gemäß Figur 1 und Figur 5 sind nach der Tabelle gemäß Figur 2 die Bremsen B1 und BR sowie die Kupplung K3 eingerückt, so dass die beiden Teilgetriebe TA und TU wieder zu einem gemeinsamen Koppelgetriebe mit festgebremstem Planetenträger PTU miteinander verbunden sind, dem das in seine Standübersetzung gebrachte eingangsseitige Teilgetriebe im Kraftfluss in Reihe vorgeschaltet ist. Die Standübersetzung ergibt wiederum eine hohe Gangübersetzung, während das wirksame Reaktionsglied PTU im Koppelgetriebe den gegenläufigen Drehsinn der gekuppelten Zentralräder SA und SU vermittelt, deren Drehzahl im ausgangsseitigen Teilgetriebe TA für die Ausgangswelle A wieder etwas reduziert wird.

Für die Ausführungsformen gemäß den Figuren 3 und 6 sind nach der Tabelle in Figur 4 lediglich die Bremsen B1 und BR ausgerückt, wobei die Funktion des eingerückten Zustandes der Kupplung K3 von Figur 1 hier wiederum von der Koppelwelle VUF erfüllt wird, so dass die beiden Teilgetriebe TA und TU zu einem gemeinsamen Koppelgetriebe mit festgebremstem Planetenträger PTU als Reaktionsglied miteinander verbunden sind, dem das in seine Standübersetzung mit festgebremstem Zentralrad SE gebrachte eingangsseitige Teilgetriebe TE im Kraftfluss in Reihe vorgeschaltet ist. Die Standübersetzung vermittelt eine hohe Gangübersetzung, während die eingerückte Rückwärtsgangbremse BR für den gegenläufigen Drehsinn der gekuppelten Zentralräder SA und SU ursächlich ist, deren Drehzahl im ausgangsseitigen Teilgetriebe TA für die Ausgangswelle A wieder etwas reduziert wird.

### Getriebezustand Rückwärtsgang R2

Für die Ausführungsformen gemäß Figur 1 und Figur 5 sind nach der Tabelle gemäß Figur 2 die Kupplungen K1 und K3 sowie die Rückwärtsgangbremse BR eingerückt. Auf diese Weise läuft das eingangsseitige Teilgetriebe TE als geschlossener Block mit der Teilübersetzung 1:1 um, welchem das aus den beiden anderen Teilgetrieben TA und TU gebildete Koppelgetriebe mit festgebremstem Planetenträger PTU als Reaktionsglied im Kraftfluss in Reihe nachgeordnet ist. Die Teilübersetzung 1:1 liefert eine niedrigere Gangübersetzung, während die eingerückte Bremse BR den gegenläufigen Drehsinn der gekoppelten Zentralräder SA und SU vermittelt, deren Drehzahl im ausgangsseitigen Teilgetriebe TA für die Ausgangswelle A wieder etwas reduziert wird.

Für die Ausführungsformen gemäß Figur 3 und Figur 6 sind entsprechend der Tabelle in Figur 4 die Kupplung K1 und die Rückwärtsgangbremse BR eingerückt. Die Funktion des eingerückten Zustands der Kupplung K3 gemäß Figur 1 erfüllt auch in diesem Falle die Koppelverbindung VUF. Infolgedessen läuft das eingangsseitige Teilgetriebe TE als geschlossener Block mit der Teilübersetzung 1:1 um, welchem das aus den beiden anderen Teilgetrieben TA und TU gebildete Koppelgetriebe mit festgebremstem Planetenträger PTU als Reaktionsglied in Kraftfluss in Reihe nachgeordnet ist. Die Teilübersetzung 1:1 liefert eine niedrigere Gangübersetzung, während die eingerückte Bremse BR den gegenläufigen Drehsinn der gekuppelten Zentralräder SA und SU vermittelt, deren Drehzahl im ausgangsseitigen Teilgetriebe TA für die Ausgangswelle A wieder etwas reduziert wird.

### Getriebezustand Rückwärtsgang R3

Entsprechend der Tabelle in Figur 2 sind die Bremsen BN und BR sowie die Kupplung K3 eingerückt. Demzufolge sind die beiden Teilgetriebe TA und TU zu einem Koppelgetriebe mit festgebremstem Planetenträger PTU als Reaktionsglied miteinander verbunden, welchem das in eine Standübersetzung mit festgebremstem Reaktionsglied NHE geschaltete eingangsseitige Teilgetriebe TE im Kraftfluss in Reihe vorgeordnet ist. Das Neben-Zentralrad NHE als Reaktionsglied ist in diesem Falle für die höchste Übersetzung der drei Rückwärtsgangsstufen R1 bis R3 ursächlich, während die eingerückte Bremse BR den gegenläufigen Drehsinn der gekuppelten Zentralräder SA und SU vermittelt, deren Drehzahl im ausgangsseitigen Teilgetriebe TA für die Ausgangswelle A wieder etwas reduziert wird.

Für die Ausführungsformen gemäß Figur 3 und Figur 6 sind entsprechend der Tabelle der Figur 4 lediglich die Bremsen BN und BR eingerückt, wobei die Funktion des eingerückten Zustandes der Kupplung K3 von Figur 1 in diesem Falle wiederum von der Koppelwelle VUF erfüllt wird. Demzufolge sind die beiden Teilgetriebe TA und TU zu einem Koppelgetriebe mit festgebremstem Planetenträger PTU als Reaktionsglied miteinander verbunden, welchem das in eine Standübersetzung mit festgebremstem Neben-Zentralrad NHE als Reaktionsglied gebrachte eingangsseitige Teilgetriebe TE im Kraftfluss in Reihe vorgeordnet ist. Das festgebremste Neben-Zentralrad NHE ist für eine sehr hohe Gangübersetzung - die höchste der drei Rückwärtsgangsstufen - ursächlich, während der festgebremste Planetenträger PTU den gegenläufigen Drehsinn der gekuppelten Zentralräder SA und SU erzeugt, deren Drehzahl im ausgangsseitigen Teilgetriebe TA für die Ausgangswelle A wieder etwas reduziert wird.

### Zur Anbindung der Getriebekomponenten: zweite Teilgruppe mit Drehmomentwandler 12

Gemäß den Figuren 1 und 3 ist dem Teilgetriebe 11 der hydrodynamische Drehmomentwandler 12 vorgeschaltet. In diesem steht eine Motorwelle 15 in Antriebsverbindung mit einem Pumpenrad 16. Von dem Pumpenrad 16 wird über hydrodynamische Kopplung und unter Zwischenschaltung eines über einen Freilauf 17 gegenüber einem Gehäuse 18 abgestützten Leitrades 19 das Antriebsmoment an ein Turbinenrad 20 übergeben, welches in Antriebsverbindung mit der Eingangswelle E steht. Der mit Pumpenrad 16, Freilauf 17, Leitrad 19 und Turbinenrad 20 gebildete hydrodynamische Drehmomentwandler 12 verfügt vorzugsweise über eine Wandlerüberbrückungskupplung 21, mittels welcher die Motorwelle 15 in Teilbetriebsbereichen unmittelbar mit der Eingangswelle E verbindbar ist. Ergänzend kann in dem hydrodynamischen Drehmomentwandler 12 eine Torsionsdämpfereinheit und/oder eine Schwingungs-(Tilger-)Einheit vorgesehen sein.

### Zur Anbindung der Getriebekomponenten: erste Teilgruppe mit Hybridsatz 13

Gemäß den Figuren 5 und 6 erfolgt der Kraftfluss von der Motorwelle 15 in dem Hybridsatz 13 über einen Torsionsdämpfer 30 sowie ein diesem in Reihenschaltung nachgeordnetes Kupplungsmodul KM zur Eingangswelle E. Für eine zu den dargestellten Ausführungsbeispielen alternative Ausführungsform ist der Torsionsdämpfer 30 dem Kupplungsmodul KM, insbesondere einer nassen Anfahrkupplung, nachgeordnet

Der Antriebsstrang 10 verfügt über ein erstes elektrisches Antriebsaggregat 31 sowie ein zweites elektrisches Antriebsaggregat 32. Das erste elektrische Antriebsaggregat 31 besitzt einen gehäusefesten Stator 33, welcher in Wechselwirkung mit dem Rotor 34 zur Erzeugung eines Antriebsmomentes und/oder zur Rekuperation elektrischer Energie in Wechselwirkung tritt. Der Rotor 34 ist mit der Eingangsseite des Torsionsdämpfers 30 bzw. der Motorwelle 15 antriebsfest verbunden, so dass mittels des ersten elektrischen Antriebsaggregates 31 zusätzlich zur Brennkraftmaschine ein Moment in den Antriebsstrang 10 einspeisbar ist oder aber ein im Antriebsstrang 10 vorhandenes Moment (zumindest teilweise) zur Rekuperation elektrischer Energie genutzt werden kann.

Das zweite elektrische Antriebsaggregat 32 verfügt über einen Stator 35 sowie einen Rotor 36. Der Stator 35 ist gehäusefest angebunden, während der Rotor 36 mit einer Zwischenwelle 37 in Antriebsverbindung steht, welche über zwei Kupplungen KE, KG verfügt. Mittels der Kupplung KE ist die Zwischenwelle 37 unmittelbar mit der Eingangswelle E verbindbar.

Gemäß den in den Figuren 5, 6 und 7 dargestellten Ausführungsbeispielen ist die Zwischenwelle 37 über die Kupplung KG unmittelbar mit dem Sonnenrad SE des Teilgetriebes TE verbindbar.

Die elektrischen Antriebsaggregate 31, 32 werden gespeist von mindestens einer in den Figuren nicht dargestellten Batterie. Die Beaufschlagung und Betriebsweise der elektrischen Antriebsaggregate 31, 32 werden von einer geeigneten, ebenfalls nicht dargestellten Steuerungseinrichtung bzw. Regelungseinrichtung beaufschlagt. Die Steuerungseinrichtung beaufschlagt die oder steht in Wechselwirkung mit einer weiteren Steuerungseinrichtung für Kupplungen und Bremsen des Antriebsstranges. Eine Wechselwirkung mit weiteren Regelungseinrichtungen, insbesondere für die Brennkraftmaschine, ist ebenfalls möglich. In den vorgenannten Steuerungseinrichtungen erfolgt eine Berücksichtigung von Betriebsparametern des Antriebsstranges, fahrerspezifischen Parametern, welche insbesondere durch eine Fahrertyperkennung erfasst werden, sowie Umgebungsparametern.

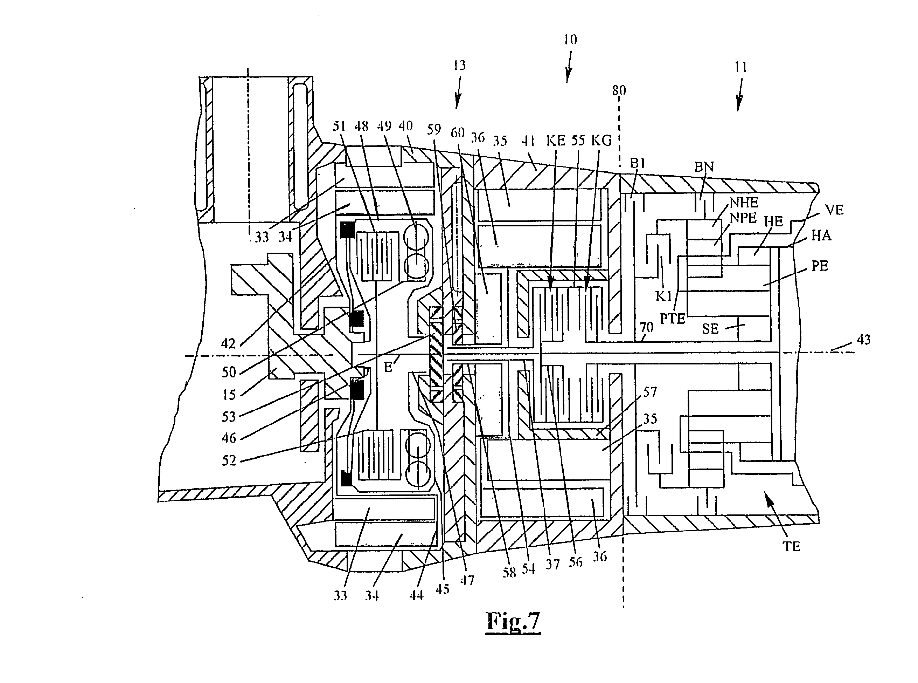

In Figur 7 ist eine konstruktive Ausgestaltung eines Antriebsstranges 10 mit einem Hybridsatz 13 und einem Teilbereich des Teilgetriebes 11 dargestellt. Der Hybridsatz 13 ist hierbei mit einem Gehäuse gebildet, welches über ein erstes Gehäuseteil 40 sowie ein zweites Gehäuseteil 41 verfügt. Die Motorwelle 15 ragt in einen Innenraum des ersten Gehäuseteiles 40 hinein. Die Motorwelle 15 trägt in dem Endbereich über eine Scheibe 42 den radial außenliegend an dieser befestigten Rotor 34. Rotor 34 und Scheibe 42 sind im dargestellten Halbschnitt L-förmig ausgebildet. Radial außenliegend von dem Rotor 34 ist bei ungefähr vollständiger axialer Überdeckung der Stator 33 angeordnet, welcher sich an einer zylinderförmigen Innenwandung des ersten Getriebeteiles 40 abstützt (vgl. Figur 7 oberhalb der Längsachse 43-43). Demgemäß ist das erste elektrische Antriebsaggregat 31 als Innenläufer ausgebildet. Abweichend kann das erste elektrische Antriebsaggregat 31 als Außenläufer ausgebildet sein (vgl. Figur 7 unterhalb der Längsachse 43-43). Gemäß dieser alternativen Ausgestaltung verfügt die Scheibe 42 im radial außenliegenden Bereich über einen in Richtung der Längsachse 43-43 orientierten U-förmigen Fortsatz 44, wobei ein Seitenschenkel des U-förmigen Fortsatzes 44 im Endbereich mit der Scheibe 42 verbunden ist und der andere Seitenschenkel den Rotor 34 trägt bzw. von dem Rotor 34 gebildet ist. Der Stator 33 ist für diese Ausgestaltungsform innenliegend zwischen den Seitenschenkeln des Fortsatzes 44 angeordnet und stützt sich in axialer Richtung an einer der Brennkraftmaschine benachbart angeordneten und radial orientierten Wandung des ersten Gehäuseteiles 40 ab.

Mit der Motorwelle 15 ist weiterhin ein in Figur 7 im dargestellten Querschnitt hantelförmiges Innengehäuse 45 verbunden. Das Innengehäuse 45 verfügt über radial innenliegende, zur Längsachse 43-43 koaxiale und auseinander weisende Fortsätze 46, 47, wobei der Fortsatz 46 Aufnahme in der Motorwelle 15 findet und der der Brennkraftmaschine abgewandte Fortsatz 47 eine Lagerstelle des Innengehäuses 45 gegenüber dem ersten Gehäuseteil 40 bildet. Im Innengehäuse 45 sind der Torsionsdämpfer 30 sowie das Kupplungsmodul KM aufgenommen. Das Innengehäuse 45 verfügt über eine Mantelfläche 48, an welcher radial innenliegend die Eingangsseite 49 des ein- oder mehrstufig ausgebildeten Torsionsdämpfers 30 angebunden ist. Eine Ausgangsseite 50 ist drehfest verbunden mit einem Innenlamellenträger 51 des Kupplungsmodules KM, welcher in an sich bekannter Weise zusammenwirkt mit einem Außenlamellenträger 52. Zwischen Innengehäuse 45 und Motorwelle 15 ist vorzugsweise eine sogenannte "Flexplate" angeordnet. Innenlamellenträger 51, Außenlamellenträger 52 und Torsionsdämpfer 30 sind bei gleichen radialen Abmessungen axial hintereinanderliegend derart angeordnet, dass der Torsionsdämpfer 30 auf der der Brennkraftmaschine abgewandten Seite des Kupplungsmodules KM angeordnet ist.

Der Außenlamellenträger 52 ist über eine geeignete Welle-Nabe-Verbindung mit der Eingangswelle E verbunden. Vorzugsweise stützt sich die Eingangswelle radial innenliegend an der Motorwelle 15 bzw. dem Innengehäuse 45 ab. Torsionsdämpfer 30, Kupplungsmodul KM, ein Teil der Eingangswelle E, die Welle-Nabe-Verbindung und das Innengehäuse 45 sind radial innenliegend von Rotor 34 und Stator 33 angeordnet. Auf der der Brennkraftmaschine abgewandten Seite des Innengehäuses 45 steht die Eingangswelle in Antriebsverbindung mit einer mechanischen Pumpe 53. Die mechanische Pumpe 53 stützt sich hierbei gegenüber dem ersten Gehäuseteil 40 ab. Vorzugsweise ist die mechanische Pumpe 53 (zumindest teilweise) radial innenliegend von Rotor 34 und Stator 33 bzw. dem Innengehäuse 45 oder dem Torsionsdämpfer 30 aus Bauraumgründen angeordnet. (Entsprechend einer alternativen, nicht dargestellten Ausführungsform entfällt die mechanische Pumpe 53, so dass lediglich mindestens eine elektrische Pumpe 59, 60 vorhanden ist.)

Auf der der Brennkraftmaschine abgewandten Seite ist das erste Gehäuseteil 40 mit dem zweiten Gehäuseteil 41 verbunden, insbesondere unter Abdichtung verschraubt. Die Eingangswelle E durchsetzt ausgehend vom Innenraum des ersten Gehäuseteiles 40 das zweite Gehäuseteil 41 bis in den Innenraum des Teilgetriebes 11. Die Eingangswelle E ist umgeben von der als Hohlwelle ausgebildeten Zwischenwelle 37. Die Zwischenwelle 37 trägt über einen fest mit dieser verbundenen radialen scheibenförmigen Tragkörper 54 den Rotor 36 des zweiten elektrischen Antriebsaggregates 32. Das zweite elektrische Antriebsaggregat 32 ist hierbei entsprechend dem ersten elektrischen Antriebsaggregat 31 als Innenläufer bzw. als Außenläufer ausgebildet, vgl. die entsprechende Darstellungen in Figur 7 oberhalb bzw. unterhalb der Achse 43-43.

Die Zwischenwelle 37 verfügt auf der dem Tragkörper 54 abgewandten Seite über eine Querschnittserweiterung, welche einen zylinderförmigen Innenlamellenträger 55 bildet. Der Innenlamellenträger 55 trägt sowohl Innenlamellen der Kupplung KE als auch Innenlamellen der Kupplung KG. Die Kupplungen KE, KG sind bei vergleichbarer radialer Bauweise axial eng benachbart zueinander angeordnet. Für die Kupplung KE wirken die dem Innenlamellenträger 55 zugeordneten Innenlamellen zusammen mit entsprechenden Außenlamellen, welche gegenüber einem Außenlamellenträger 56 drehfest gelagert sind. Der Außenlamellenträger 56 ist drehfest, insbesondere über eine geeignete Welle-Nabe-Verbindung, mit der Eingangswelle E verbunden.
Das zweite Gehäuseteil 41 bildet mit einem inneren Ansatz ein hohlzylinderförmiges gehäusefestes Innengehäuse 57, welches von der Eingangswelle E und der Zwischenwelle 37 durchsetzt ist. Die äußere Mantelfläche des Innengehäuses 57 dient vorzugsweise der Lagerung des Rotors 36 bzw. der Abstützung des Stators 35. Die Kupplungen KE, KG, das Innengehäuse 57, die Lamellenträger 55, 56 sind vorzugsweise radial innenliegend von dem zweiten elektrischen Antriebsaggregat 32 angeordnet.

Zwischen dem Tragkörper 54 und der mechanischen Pumpe 53 liegend steht über eine weitere als Hohlwelle ausgebildete Zwischenwelle 58 ein Ölpumpenmotor 60 mit einer (elektrischen) Pumpe 59 in Antriebsverbindung. Der Ölpumpenmotor 60 ist im Wesentlichen radial innenliegend vom zweiten elektrischen Antriebsaggregat 32 angeordnet und gegenüber einer Stirnwand des ersten Gehäuseteils 40 abgestützt. Die Pumpe 59 stützt sich gegenüber selbiger Stirnwand des zweiten Gehäuseteiles 41 bzw. einem Einsatz in dieses ab. Die Zwischenwelle 58 ist radial innenliegend auf der Zwischenwelle 37 oder radial außenliegend gegenüber dem Gehäuseteil 40 gelagert. Über den Ölpumpenmotor 60 kann ein Hydraulikdruck unabhängig von dem Betrieb oder einer Drehzahl der Brennkraftmaschine oder der Eingangswelle E aufgebaut werden. Beispielsweise kann auf diese Weise erstmalig ein Druck zum Schließen der Kupplung KM aufgebracht werden. Vorzugsweise sind die beiden Pumpen 53, 59 unterschiedlich ausgelegt, so dass beispielsweise die Pumpe 53 einer Grundversorgung dient, während die Pumpe 59 der Gewährleistung von von der Grundversorgung abweichenden Anforderungen dient.

Die Außenlamellen der Kupplung KG wirken zusammen mit Innenlamellen, welche drehfest mit einer Hohlwelle 70 verbunden sind. Ausgehend von der Kupplung KG durchsetzt die Hohlwelle 70 das zweite Gehäuseteil 41 in Richtung des Teilgetriebes 11. Die Hohlwelle 70 ist in dem der Kupplung KG gegenüberliegenden Endbereich antriebsfest mit dem Sonnenrad SE verbunden. Darüber hinaus steht die Hohlwelle 70 entsprechend den Ausführungen zu Figur 5 in Wirkverbindung mit der Bremse B1 sowie der Kupplung K1. Im Übrigen entsprechen die weiteren Bauelemente des Teilgetriebes 11 der in Figur 5 dargestellten und in der zugeordneten Beschreibung beschriebenen Ausgestaltung.

### Betriebszustände

### a) Stillstand des Fahrzeuges

Für einen Zustand "Aus" befindet sich der Wählhebel in der Stellung "N" oder "P". Für abgeschaltete Brennkraftmaschine und deaktivierte elektrische Antriebsaggregate 31, 32 befinden sich KM, KE, KG, K1, B1, BN in nicht aktiviertem Zustand.

Für einen Warmstart der Brennkraftmaschine erfolgt ein Anschleppen derselben über das erste elektrische Antriebsaggregat 31, welches in diesem Falle eine Leistung abgibt. Die Drehzahl der Brennkraftmaschine beträgt zwischen Null und Leerlaufdrehzahl. Der Wählhebel befindet sich in der Stellung "N" oder "P". Die Kupplungen und Bremsen KM, KE, KG, K1, B1, BN befinden sich in nicht aktiviertem Zustand.

Für einen Kaltstart der Brennkraftmaschine erfolgt ein Anschleppen derselben über eine Kombination der elektrischen Antriebsaggregate 31, 32, wobei die elektrischen Antriebsaggregate 31, 32 eine Leistung abgeben. Die Drehzahl der Brennkraftmaschine und damit des zweiten elektrischen Antriebsaggregates 32 liegt zwischen Null und der Leerlaufdrehzahl. Für diesen Betriebszustand sind die Kupplungen KM, KE geschlossen, während Kupplungen und Bremsen KG, K1, B1 und BN nicht aktiviert sind. In diesem Fall läuft die Pumpe 59 mit einer Drehzahl größer Null.

Für einen Extremstart der Brennkraftmaschine erfolgt eine Beaufschlagung der Brennkraftmaschine durch beide elektrischen Antriebsaggregate 31, 32, wobei in diesem Fall das Summengetriebe TE derart zwischengeschaltet ist, dass das Abtriebsmoment des zweiten elektrischen Antriebsaggregates 32 in Richtung der Brennkraftmaschine vergrößert ist. Das zweite elektrische Antriebsaggregat 32 wird für diesen Betriebszustand mit einer aus den Übersetzungsverhältnisses gegebenen höheren Drehzahl der Brennkraftmaschine betrieben, beispielsweise mit der doppelten Drehzahl. Ein derartiger Extremstart erfolgt in der Wählhebelstellung "P", wobei die Kupplungen und Bremsen KM, KG, K3 und B2 geschlossen sind, während Kupplungen und Bremsen KE, K1, B1, BN deaktiviert sind. Auch in diesem Fall wird die Pumpe 59 mit einer Drehzahl größer Null betrieben.

### b) Konventioneller Betrieb ausschließlich mit Brennkraftmaschine

Für ein stehendes Fahrzeug und Wählhebelstellung "N" sind die Kupplungen und Bremsen KM, KE, KG, K1, B1, BN deaktiviert, während die Pumpe 59 mit einer Drehzahl größer Null betrieben wird.

In diesem Zustand kann eine zeitweise Antriebs- oder Warmlaufunterstützung erfolgen, für den Fall, dass das erste elektrische Antriebsaggregat 31 derart bestromt wird, dass dieses ein unterstützendes Moment liefert.

Für ein stehendes Fahrzeug und Wählhebelstellung "D" wird abweichend zum vergleichbaren Zustand in "N" die Bremse BN aktiviert. Ebenfalls in diesem Zustand ist eine zeitweise Antriebs- oder Warmlaufunterstützung durch Bestromung des ersten elektrischen Antriebsaggregates 31 möglich.

Ist eine Start-Stop-Funktion vorgesehen, so kann bei stehendem Fahrzeug und Wählhebelstellung "D" mit Vorwahl des ersten Ganges ohne Beaufschlagung der elektrischen Antriebsaggregate 31, 32 bei aktivierter Bremse BN und deaktivierten Bremsen und Kupplungen KM, KE, KG, K1, B1 die Pumpe 59 mit einer Drehzahl größer Null mit einem Druck von 2,5 Bar betrieben werden.

Für ein Anfahren sowie die Gangstufen 2 bis 7 und ein Fahren in den Rückwärtsgängen R1 bis R3 kann durch geeignete Bestromung des elektrischen Antriebsaggregates 31 ein ergänzendes Moment geliefert werden oder aber in einem Generatorbetrieb des elektrischen Antriebsaggregates 31 Energie rückgewonnen werden. Dieses erfolgt insbesondere während eines normalen Fahrbetriebes oder während einer Bremsphase des Kraftfahrzeuges. In den vorgenannten Fahrzuständen befindet sich der Wählhebel in den Stellungen "D" bzw. "R", während das zweite elektrische Antriebsaggregat 32 deaktiviert ist. Die Kupplung KM ist aktiviert, während die Kupplungen KE, KG deaktiviert sind. Die Stellung der Kupplungen und Bremsen K1, B1, BN ergibt sich aus den Ausführungen zur Schaltung des Teilgetriebes 11 zur Realisierung der einzelnen Gangstufen, s.o.

Bei geöffneten Kupplungen KE, KG können die Schleppverluste des zweiten elektrischen Antriebsaggregates 32 gering gehalten werden, da dieses lediglich mit dem Antriebsstrang gekoppelt wird, wenn dies unbedingt erforderlich ist.

### c) Dualer Betrieb der Brennkraftmaschine mit dem zweiten elektrischen Antriebsaggregat

Für stehendes Fahrzeug mit der Wählhebelstellung "N" läuft die Brennkraftmaschine mit Leerlaufdrehzahl, während die Kupplungen und Bremsen KM, KE, KG, K1, B1, BN deaktiviert sind.

Für ein Anfahren sowie ein Fahren in den Gangstufen 2 bis 7 und Rückwärtsgängen R1 bis R3 entspricht die Drehzahl des zweiten elektrischen Antriebsaggregates 32 der Drehzahl der Eingangswelle E. Über das erste und zweite elektrische Antriebsaggregat 31, 32 kann ein zusätzliches Moment eingespeist werden. Alternativ kann ein elektrisches Antriebsaggregat 31, 32 oder beide Antriebsaggregate im Generatorbetrieb zur Rückgewinnung von Energie betrieben werden. Für sämtliche vorgenannte Gangstufen sind die Kupplungen KM, KE aktiviert, während die Kupplung KG deaktiviert ist. Der Zustand der Kupplungen und Bremsen K1, B1, BN ergibt sich aus der Betriebsweise des Teilgetriebes 11, s.o.

### d) Dualer Betrieb der Brennkraftmaschine mit dem zweiten elektrischen Antriebsaggregat einschließlich der Gewährleistung einer Geared-Neutral-Funktion

In diesem Zustand ist ein Stillstand des Fahrzeuges infolge einer Geared-Neutral-Funktion gewährleistet. In diesem Zustand wird die Brennkraftmaschine mit einer Drehzahl größer oder gleich der Leerlaufdrehzahl betrieben. Das elektrische Antriebsaggregat 31 kann dann ein positives oder negatives Abtriebsmoment liefern. In diesem Zustand rotiert die Drehzahl des zweiten elektrischen Antriebsaggregates 32 mit einer dem Geared-Neutral-Punkt entsprechenden Drehzahl. Das Abtriebsmoment des zweiten elektrischen Antriebsaggregates steht in einem festen , von den geometrischen Verhältnissen des Planetensatzes 10 vorbestimmten Verhältnis zum Moment, das auf der Eingangswelle E von der Brennkraftmaschine und dem ersten elektrischen Antriebsaggregat 31 über das Hohlrad HE in den Planetensatz eingeleitet wird. Während die Kupplungen KM und KG aktiviert sind, sind die Kupplungen und Bremsen KE, K1, B1, BN deaktiviert. Die für den Geared-Neutral-Punkt erforderliche Drehzahl des zweiten elektrischen Antriebsaggregates 32 ergibt sich aus dem Verhältnis des Durchmessers des Sonnenrades SE zum Durchmesser des Hohlrades HE.

Bei unveränderter Stellung der Kupplungen und Bremsen ergibt sich eine Vorwärts- oder Rückwärtsfahrt für eine Verringerung bzw. Vergrößerung der Drehzahl des zweiten elektrischen Antriebsaggregates.

Das sich dadurch ergebende Drehzahl- und Drehmomentpotenzial am Abtrieb des Getriebes kann durch Einlegen der Bremse BR qualitativ invertiert werden, wodurch sich höhere Drehmomente bei negativen Fahrgeschwindigkeiten ergeben. In die Drehzahl- und Drehmomentgenerierung geht dann der Rückwärtsgang mit seinem Übersetzungsverhältnis als Konstante mit ein.

### e) Elektrisches Fahren

Für deaktivierte Brennkraftmaschine sowie deaktiviertes erstes elektrisches Antriebsaggregat 31 kann ein Betrieb des Antriebsstranges lediglich mittels des zweiten elektrischen Antriebsaggregates 32 erfolgen.

Für stehendes Fahrzeug mit Wählhebelstellung "N" sind die Kupplungen KM, KG, K1, B1, BN deaktiviert, während die Kupplung KE aktiviert oder deaktiviert ist.

Ein Anfahren sowie ein Fahren in den Gangstufen 2 bis 7 sowie Rückwärtsgangstufen R1 bis R3 erfolgt durch geeignete Bestromung des zweiten elektrischen Antriebsaggregates, wobei dieses entweder ein Antriebsmoment liefert oder im Generatorbetrieb eine Leistung in eine Batterie einspeist. Für diese Fahrzustände befindet sich der Wählhebel in den Stellungen "D" bzw. "R", während die Kupplungen KM, KG deaktiviert sind und die Kupplung KE aktiviert ist. Die Stellung der Kupplung K1 und der Bremsen B1, BN ergibt sich aus den Schaltzuständen des Teilgetriebes 11 in den jeweiligen Gangstufen, s.o.

### f) Stufenloser Fahrbetrieb mit zwei unterschiedlichen Fahrbetriebsbereichen

Nach einem weiteren Vorschlag der Erfindung ist eine stufenlose Übersetzung mit zwei Fahrbereichen ermöglicht. Die Herbeiführung der stufenlosen Übersetzung erfolgt hierbei insbesondere mittels einer Überlagerung der Antriebe
- durch das zweite elektrische Antriebsaggregat 32 und
- durch das Antriebsaggregat bzw. die Brennkraftmaschine, welche mit der Motorwelle 15 in Antriebsverbindung steht, und/oder das erste elektrische Antriebsaggregat 31

über das Planetenräder-Teilgetriebe TE, wobei einer Übergabe des Momentes an das Teilgetriebe TA in einem ersten Fahrbereich über das Abtriebselement VE erfolgt sowie in einem zweiten Fahrbereich über das Abtriebselement VE sowie die Kupplung K2 bzw. das Zentralrad HA erfolgt.

Für das Ausführungsbeispiel gemäß Fig. 5-7 sind in einem ersten Fahrbereich die Schaltelemente KG, B2, K3 (sowie ein etwaiges der Motorwelle 15 zugeordnetes Anfahrelement) geschlossen. In diesem Fahrbereich erfolgt eine Kraftübertragung von dem Abtriebselement VE über das Planetenräder-Umkehr-Teilgetriebe TU bei Antrieb des äußeren Zentralrades HU und gehäusefestem inneren Zentralrad SU zum Planetenträger PTU, welcher über die Antriebsverbindung VA und das Planetenräder-Teilgetriebe TA mit der Ausgangswelle A in Antriebsverbindung steht, wobei die Antriebsverbindung VA mit dem äußeren Zentralrad HA verbunden ist, das innere Zentralrad SA gehäusefest ist und die Ausgangswelle drehfest mit dem Planetenträger PTA verbunden ist.

Der erste Fahrbereich ist vorzugsweise Fahrgeschwindigkeiten von -x über Null bis +x zugeordnet, wobei die Rückwärtsgeschwindigkeit durch die Steuerungseinrichtung begrenzt sein kann. Vorzugsweise sind dem ersten Fahrbereich Geschwindigkeiten von (-75 km/h) -30 km/h bis +75 km/h zugeordnet. Das maximale Abtriebsmoment ist je nach Auslegung und Zusammenspiel des elektrischen Antriebsaggregates und dem Antriebsaggregat durch eines der beiden vorgenannten Aggregate begrenzt und beträgt beispielsweise 1300 Nm, insbesondere im Bereich zwischen 10 km/h und 40 km/h. Die Grenzwerte der Übersetzung betragen insbesondere motordrehzahlabhängig -0,65 und +0,58, wobei die Grenzwerte im Teillastbereich verringert sein können.

Für das Ausführungsbeispiel gemäß Fig. 5-7 sind in einem zweiten Fahrbereich die Schaltelemente KG, K2, K3 (sowie ein etwaiges der Motorwelle 15 zugeordnetes Anfahrelement) geschlossen. In diesem Fahrbereich erfolgt eine Kraftübertragung von dem Abtriebselement VE über das Planetenräder-Umkehr-Teilgetriebe TU bei Antrieb des äußeren Zentralrades HU. Das innere Zentralrad SU ist über die Kupplung K3 mit dem inneren Zentralrad SA des Planetenräder-Teilgetriebes TA drehfest verbunden. Der Planetenträger PTU ist über die Antriebsverbindung VA mit dem äußeren Zentralrad HA verbunden, welches darüber hinaus über die Kupplung K2 drehfest mit der Eingangswelle E verbunden ist. Der Planetenträger PTA ist drehfest mit der Ausgangswelle A verbunden.

Der zweite Fahrbereich ist vorzugsweise höheren Fahrgeschwindigkeiten (bspw. von ungefähr 40 km/h bis +300 km/h) zugeordnet. Das maximale Abtriebsmoment ist niedriger als im ersten Fahrbereich, beispielsweise 440 Nm im Bereich zwischen 50 km/h und 250 km/h. Die Grenzwerte der Übersetzung sind motordrehzahlabhängig beispielsweise - 1,7 und +0,34, wobei abhängig von den Drehzahlen der Antriebsaggregate kleinere Übersetzungen möglich sind als im Stufenbetrieb.

Im zweiten Fahrbetriebsbereich ergibt sich insbesondere eine verminderte Drehmomentenbelastung der elektrischen Antriebsaggregate 31, 32. Die Gesamtübersetzung des Getriebes erweitert sich auf Overdrive-Gebiete von 0,4 und darunter.

Eine Umschaltung zwischen den beiden Fahrbereichen erfolgt, wenn die Drehzahl der Eingangswelle E und das zweite elektrische Antriebsaggregat 32 in beiden Fahrbereichen die gleichen Drehzahlen haben. Dies entspricht hier insbesondere der Übersetzung des Ganges, welcher dargestellt ist mit offenen Schaltelementen B1, BN und K1. Für einen derartigen Wechsel von einem Fahrbereich in den anderen Fahrbereich ist keine Beschleunigung oder Verzögerung der trägen Massen notwendig, während zumindest das Moment des zweiten elektrischen Antriebsaggregates 32 absolut verändert wird sowie seine Richtung ändert.

Für den Fahrbetrieb sind einzelne Betriebsarten des Antriebsstranges ermöglicht, wobei diese Betriebsarten sämtlich oder nur Teile der einzelnen Betriebsarten genutzt werden können. Vorzugsweise erfolgt der Einsatz des Antriebsstranges
- als Stufenautomat, wobei jeweils eine Gangstufe eine Betriebsart darstellt,
- als stufenloses Getriebe in einem ersten Fahrbereich,
- als stufenloses Getriebe in einem zweiten Fahrbereich.

Weitere mögliche Betriebsarten sind erfindungsgemäß wie folgt ermöglicht:
- In Teilbetriebsbereichen maximalen Leistungsbedarfes erfolgt ein Antrieb über die Brennkraftmaschine, das erste elektrische Antriebsaggregat und das zweite elektrische Antriebsaggregat.
- In Teilbetriebsbereichen, in welchen weder ein erhöhter Leistungsbedarf vorliegt noch eine Rekuperation von Energie mittels der elektrischen Antriebsaggregate erforderlich ist, erfolgt ein Antrieb ausschließlich über die Brennkraftmaschine.
- Zur Rekuperation von Energie, beispielsweise zum Wiederaufladen einer Batterie, erfolgt bei einem Antrieb über die Brennkraftmaschine eine Rückspeisung der Energie über das erste und/oder zweite elektrische Antriebsaggregat in die Batterie.
- In Teilbetriebsbereichen ist es weiterhin möglich, dass ein Antrieb über die Brennkraftmaschine und ein elektrisches Antriebsaggregat, insbesondere das erste elektrische Antriebsaggregat, wobei dieses elektrische Antriebsaggregat zumindest teilweise von dem im Generatorbetrieb eingesetzten anderen elektrischen Antriebsaggregat, insbesondere von dem zweiten elektrischen Antriebsaggregat, gespeist ist. Hierdurch ist eine Entlastung der Batterie und/oder ein verlängerter Betrieb bei Beaufschlagung der Batterie ermöglicht.

Weitere mögliche Betriebsarten sind das Starten einer Brennkraftmaschine, insbesondere wahlweise alternativ oder kumulativ mittels des ersten elektrischen Antriebsaggregates (31) und/oder des zweiten elektrischen Antriebsaggregates (32). Eine weitere mögliche Betriebsart betrifft die Nutzung des zweiten und/oder ersten elektrischen Antriebsaggregates (31, 32) zur Rekuperation von Energie bzw. Rückspeisung derselben in eine Batterie. Andere mögliche Betriebsarten ergeben sich aus den zuvor dargestellten Betriebszuständen a) bis e).

Eine Auswahl einzelner Betriebsarten erfolgt nach einer Fahrstrategie, welche insbesondere in einem geeigneten Steuergerät abgelegt ist. Die Fahrstrategie beinhaltet hierbei insbesondere eine Auswahl einer Betriebsart nach
- einem Ladezustand einer Batterie,
- zumindest einem Umgebungsparameter wie eine Steigung, eine geodätische Höhe, eine Temperatur o.ä.,
- einem Fahrzeugparameter wie beispielsweise ein Beladungszustand, eine Betriebstemperatur oder eine Betriebsdauer des Antriebsstranges oder eines antriebsaggregates, eine Betriebstemperatur oder eine Betriebshäufigkeit oder einen Verschleißzustand eines Anfahrelementes, einer Kupplung oder einer Bremse,
- zumindest einer Bewegungsgröße wie die Fahrzeuggeschwindigkeit oder die Fahrzeugbeschleunigung,
- zumindest einer von einem Fahrer abhängigen Größe wie eine Pedalbetätigung (Beschleunigungswunsch, Bremspedal), eine manuelle Betätigung (manuelle Anwahl unterschiedlicher Getriebeprogramme) und/oder ein ermittelter Fahrertyp
- einem Kennfeld, welches beispielsweise Wirkungsgrade, Leistungsbilanzen, erzielbare Beschleunigungswerte o. Ä. beinhaltet,
- einer a-priori vorgegebenen Betriebsstrategie,
und/oder
- Emissionswerten (Brennkraftmaschine oder Katalysator kalt/warm),
wobei es sich bei den vorgenannten Einflussparametern um einen aktuellen Parameter, zeitlich zurückliegende Parameter und/oder einen gemittelten Parameter handeln kann.

Der dargestellte Antriebsstrang 10 ermöglicht einen hybriden Betrieb mit zusätzlich zum hybriden Betrieb vorliegenden sieben Vorwärtsgängen und drei möglichen Rückwärtsgängen, unter Gewährleistung hoher übertragbarer Abtriebsmomente. Bei der Kupplung KM kann es sich um eine trockene oder nasse Kupplung mit teilweiser oder voller Anfahrfunktionalität handeln. Alternativ kann die Kupplung KM durch die erfindungsgemäße Ausgestaltung geringer dimensioniert werden, da für die unterschiedlichen, möglichen Anfahr-Betriebszustände und die elektrische Unterstützung des Antriebsstranges hinter der Kupplung KM die Kupplung KM (zumindest zeitweise) geringeren Beanspruchungen ausgesetzt ist. Kommt es zu einer Überlastung der Kupplung KM, so kann durch ein Anfahren ohne diese Kupplung KM über ein elektrisches Antriebsaggregat eine Entlastung erfolgen.

Bei einem gleichzeitigen Betrieb des zweiten elektrischen Antriebsaggregates 32 und der Brennkraftmaschine ist in dem ersten Fahrbereich eine stufenlose Übersetzung zum Abtriebselement VE für die Gangstufen 1 bis 3, Fahrzeugstillstand sowie die Rückwärtsfahrt [bzw. in dem zweiten Fahrbereich ein Abtrieb zu dem Abtriebselement VE sowie zum Zentralrad HA für die Gangstufen 4 bis 7] gewährleistet. In anderen Betriebszuständen ist das zweite elektrische Antriebsaggregat 32 gezielt abkuppelbar, so dass eine unnötige Schleppleistung minimiert oder vermieden werden kann.

Bei dem zweiten elektrischen Antriebsaggregat 32 handelt es sich vorzugsweise um einen Hochmoment-Langsamläufer, während das erste elektrische Antriebsaggregat ein verhältnismäßig niedriges Moment bei hohen Drehzahlen liefert

Der Antriebsstrang 10 verfügt, insbesondere für einen Betrieb des zweiten elektrischen Antriebsaggregates 32, über zwei unterschiedliche Leistungszweige, welche für unterschiedliche Schaltzustände der Kupplungen KE, KG unterschiedlich sind:

Für geschlossene Kupplung KE verläuft der erste Leistungszweig mit dem Moment der Brennkraftmaschine über die Motorwelle 15 und den Torsionsdämpfer 30 sowie die Kupplung KM, ggf. unter Leistungsaustausch mit dem ersten elektrischen Antriebsaggregat 31. Der zweite Leistungszweig verläuft über das zweite elektrische Antriebsaggregat 32, den Tragkörper 54 und die Zwischenwelle 37. In der ersten Betriebsstellung erfolgt eine Vereinigung der beiden Leistungszweige über die Kupplung KE, so dass sich die Beaufschlagung der im Kraftfluss nachgeschalteten Eingangswelle E aus der Überlagerung der Antriebsmomente des ersten und des zweiten Leistungszweiges ergibt. Infolge der geschlossenen Kupplung KE sind die Drehzahlen von Eingangswelle E, Zwischenwelle 37, Tragkörper 54, Kupplung KM, ggf. erstem elektrischen Antriebsaggregat 31, Motorwelle 15 und der Brennkraftmaschine identisch.

In einer zweiten Betriebsstellung verläuft der erste Leistungszweig von der Brennkraftmaschine über die Motorwelle, den Torsionsdämpfer 30, die Kupplung KM, die Eingangswelle E, ggf. unter Leistungsaustausch mit dem ersten elektrischen Antriebsaggregat 31, während der zweite Leistungszweig von dem zweiten elektrischen Antriebsaggregat 32 über den Tragkörper 54, die Zwischenwelle 37, die Kupplung KG läuft. Eine Überlagerung der beiden Leistungszweige erfolgt im Teilgetriebe TE, nämlich dem mit einem Planetensatz mit einem Doppelplaneten ausgebildeten Summengetriebe, bei welchem das Hohlrad HE mit dem ersten Leistungszweig und das Sonnenrad SE mit dem zweiten Leistungszweig antriebsfest gekoppelt ist. Infolge der Vereinigung durch das Summengetriebe können der erste Leistungszweig und der zweite Leistungszweig mit unterschiedlichen Drehzahlen betrieben werden.

Besonders vorteilhaft kann die erfindungsgemäße Ausgestaltung zur Erzielung einer Modulbauweise für Antriebsstränge unterschiedlicher Bauart Einsatz finden:

Demgemäß beinhaltet eine erste Teilgruppe von Antriebssträngen Merkmale entsprechend der Ausführungsform nach Figur 5, während eine zweite Teilgruppe von Antriebssträngen Merkmale gemäß dem Antriebsstrang nach Figur 1 beinhaltet. Alternativ oder zusätzlich kann eine Teilgruppe entsprechend Merkmalen der Figur 6 und/oder eine Teilgruppe entsprechend Merkmalen der Figur 4 gestaltet sein. Für eine derartige Ausgestaltung ergibt sich eine identische Gestaltung für das Teilgetriebe 11 abtriebsseitig von der imaginären Trennebene 80-80. Lediglich die Schnittstelle des Summengetriebes bzw. Teilgetriebes TE zur Trennebene 80-80 ist für die Teilgruppen unterschiedlich zu gestalten. Während gemäß Figur 1 das Sonnenrad SE lediglich mit der Bremse B1 und der Kupplung K1 verbunden ist und somit keine Schnittstelle zur Trennebene 80-80 hat, ist die Hohlwelle 70 für die Ausgestaltung gemäß Figur 5 aus der Trennebene 80-80 zur Anbindung der Kupplung KG hinauszuführen. Andererseits ist gemäß Figur 1 der Steg PTE über einen Freilauf F1 gehäusefest anzubinden, während gemäß Figur 5 eine gehäusefeste Anbindung des Steges PTE nicht notwendig ist.

Für eine Realisierung des Hybridsatzes 13 kann ein ohnehin vorhandener Planetensatz des Teilgetriebes 11 Einsatz finden, nämlich das Teilgetriebe TE. Besonders vorteilhaft ist es, wenn die axiale Baulänge des Hybridsatzes 13 ungefähr der axialen Baulänge des Drehmomentwandlers 12 entspricht, so dass die Antriebsstränge unterschiedlicher Teilgruppen in gleichen Einbauräumen eingesetzt sein können. Alternativ verfügt das zweite Gehäuseteil 41 ungefähr über die axiale Baulänge des Drehmomentwandlers 12.

Vorzugsweise existiert eine dritte Teilgruppe von Antriebssträngen, bei welchen anstelle des Hybridsatzes 13 eine (trockene oder nasse) Anfahrkupplung eingesetzt ist. Die vorgenannte Anfahrkupplung bzw. der Drehmomentwandler 12 sind insbesondere in den Bereichen bzw. radial innenliegend von Bereichen angeordnet, in denen für die erste Teilgruppe das erste und/oder zweite elektrische Antriebsaggregat 31, 32 angeordnet ist.

In dem Antriebsstrang sind zwei Betriebsstellungen vorgesehen. In einer ersten Betriebsstellung erfolgt eine direkte Überlagerung des Antriebsmomentes der Brennkraftmaschine mit dem Moment des zweiten elektrischen Antriebsaggregates ohne Zwischenschaltung von weiteren Übersetzungsgetrieben. In dieser Betriebsstellung kann somit das Moment der Brennkraftmaschine mit einem Moment des zweiten Antriebsaggregates ergänzt werden, ein ausschließlicher Betrieb über das zweite elektrische Antriebsaggregat, eine Rückgewinnung von Energie, beispielsweise für eine Einspeisung in eine Batterie oder für einen Betrieb des ersten elektrischen Antriebsaggregates, erfolgen und/oder über das zweite elektrische Antriebsaggregat die Brennkraftmaschine während eines Startes betrieben werden.

In einer anderen Betriebsstellung sind zwei Leistungszweige über das Summengetriebe miteinander koppelbar. Hierbei stehen die beiden Leistungszweige jeweils mit zwei Getriebegliedern (der Getriebeglieder Hohlrad, Planet, Steg, Sonnenrad) des Summengetriebes in Antriebsverbindung. Der Abtrieb des Summengetriebes ist in diesem

Fall von einem dritten Getriebeglied (VE) gebildet. Durch die Überlagerung mittels des Summengetriebes ergibt sich eine variable Übersetzung in Richtung des Abtriebselementes. Auf diese Weise kann beispielsweise ein sogenannter Geared-Neutral-Punkt realisiert werden, für den bei arbeitender Brennkraftmaschine sowie arbeitendem zweiten elektrischen Antriebsaggregat das Abtriebselement steht. Weiterhin ist nach Maßgabe der Drehzahl des zweiten elektrischen Antriebsaggregates eine Vorwärts- und Rückwärtsbewegung des Abtriebselementes möglich.

Das Abtriebselement ist ein Eingangsglied eines nachgeschalteten Teilgetriebes. Hierdurch ist die Kombination einzelner erfindungsgemäßer Maßnahmen mit einem an sich bekannten Teilgetriebe, beispielsweise entsprechend der Druckschrift DE 199 10 299 C1, ermöglicht, wodurch Vorteile der erfindungsgemäßen Maßnahmen mit Vorteilen für an sich bekannte Getriebe kombiniert werden können. Durch die erfindungsgemäße Ausgestaltung ist weiterhin ein rein elektrisches Fahren des Kraftfahrzeuges unter Verwendung aller Gangstufen des nachgeschalteten Teilgetriebes möglich. Des Weiteren können die nachgeschalteten Teilgetriebe einerseits für eine Kombination in Antriebssträngen mit einer Brennkraftmaschine und zwei elektrischen Antriebsaggregaten, also für einen Hybridantrieb, genutzt werden sowie ebenfalls für weitere Antriebsstränge, welche beispielsweise lediglich über eine Brennkraftmaschine verfügen. Hierdurch kann das Teilgetriebe für unterschiedliche Einsatzzwecke in großen Stückzahlen mit einem hohen Gleichanteil der Bauteile hergestellt werden.

Nach Maßgabe der Betriebsbedingungen erfolgt (teilweise) ein Start der Brennkraftmaschine bei abgeschaltetem zweitem elektrischen Antriebsaggregat und geöffneter Kupplungen durch Beaufschlagung der Brennkraftmaschine mit dem Abtriebsmoment des ersten elektrischen Antriebsaggregates. Auf diese Weise ist insbesondere ein Warmstart der Brennkraftmaschine mittels des ersten elektrischen Antriebsaggregates ermöglicht. Für abweichende Betriebsbedingungen erfolgt ein Start der Brennkraftmaschine bei geschlossenen Kupplungen durch Beaufschlagung der Brennkraftmaschine mit dem Abtriebsmoment des ersten elektrischen Antriebsaggregates sowie des zweiten elektrischen Antriebsaggregates. Das zum Anschleppen der Brennkraftmaschine zur Verfügung stehende Moment ergibt sich somit aus der Überlagerung der Antriebsmomente der beiden Antriebsaggregate. Infolge des erhöhten zur Verfügung stehenden Momentes eignet sich diese Betriebsweise insbesondere für einen Kaltstart der Brennkraftmaschine. Für beide vorgenannten Betriebsweisen werden die elektrischen Antriebsaggregate von einer Fahrzeugbatterie gespeist.

Weiterhin ist es möglich, bei geöffneter Anfahrkupplung die Brennkraftmaschine mit dem ersten elektrischen Antriebsaggregat anzuschleppen, während gleichzeitig ein elektrischer Antrieb des Kraftfahrzeuges über das zweite elektrische Antriebsaggregat erfolgt.

Weiterhin ist es möglich, dass nach Maßgabe der Betriebsbedingungen ein Start der Brennkraftmaschine bei geschlossenen Kupplungen durch Beaufschlagung der Brennkraftmaschine mit dem Antriebsmoment des ersten elektrischen Antriebsaggregates sowie des zweiten elektrischen Antriebsaggregates, wobei in diesem Fall zwischen das zweite elektrische Antriebsaggregat und die Brennkraftmaschine das Summengetriebe zwischengeschaltet ist. Hierdurch ist ermöglicht, dass das Abtriebsmoment des zweiten elektrischen Antriebsaggregates in Richtung der Brennkraftmaschine übersetzt wird, wodurch ein weiter erhöhtes Anschleppmoment für die Brennkraftmaschine ermöglicht ist. Diese Betriebsweise eignet sich insbesondere für einen Extremstart der Brennkraftmaschine.

Gemäß einem weiteren Vorschlag der Erfindung zur Lösung der der Erfindung zugrundeliegenden Aufgabe ist eine Gruppe von Antriebssträngen vorgesehen, welche jeweils über ein dem Abtriebselement nachgeschaltetes Getriebe, beispielsweise entsprechend der Druckschrift DE 199 10 299 C1, verfügen. Diese Gruppe verfügt über unterschiedliche Teilgruppen von Antriebssträngen unterschiedlicher Bauart.
- Es liegt eine erste Teilgruppe von Antriebssträngen vor, welche einen Hybridantrieb mit einer Brennkraftmaschine und zwei elektrischen Antriebsaggregaten aufweisen.
- Für eine zweite Teilgruppe der Antriebsstränge ist anstelle der für den Hybridantrieb notwendigen Teile zwischen die Brennkraftmaschine und das Abtriebselement im Einbaubereich des ersten und/oder zweiten elektrischen Antriebsaggregates (anstelle derselben) ein hydrodynamischer Drehmomentwandler zwischengeschaltet.

Durch diese erfindungsgemäße Ausgestaltung ergibt sich eine Modulbauweise, für welche das dem Abtriebselement nachgeschaltete Teilgetriebe mit einem geeigneten Vorschaltmodul kombiniert werden kann, so dass bei gleichen Teilgetrieben mit einem hohen Gleichanteil auf einfache Weise ein Hybridantrieb sowie ein konventioneller Antrieb, insbesondere ein Automatikgetriebe mit einem hydrodynamischen Drehmomentwandler, geschaffen werden kann.

Gemäß einer erfindungsgemäßen Weiterbildung der Gruppe von Antriebssträngen ist eine dritte Teilgruppe vorhanden, für welche zwischen die Brennkraftmaschine und das Abtriebselement im Einbaubereich des ersten und/oder zweiten elektrischen Antriebsaggregates (anstelle derselben) eine (nasse oder trockene) Anfahrkupplung zwischengeschaltet ist. Demgemäß können in einfacher Modulbauweise drei unterschiedliche Varianten von Antriebssträngen geschaffen werden. Beispielsweise handelt es sich bei der dritten Teilgruppe um Antriebsstränge zur Realisierung eines Automatikgetriebes mit gegenüber der zweiten Teilgruppe sportlicherem Betriebsverhalten.

Eine besonders vorteilhafte Gruppe von Antriebssträngen ist dann gegeben, wenn es sich bei dem Summengetriebe um einen eingangsseitigen Planetensatz des Teilgetriebes handelt. Hierdurch kann die für die Realisierung eines Hybridantriebes entsprechend der ersten Teilgruppe notwendige Anzahl an erforderlichen Bauteilen weiter reduziert werden.

## Patentansprüche

1. Antriebsstrang mit
- einem Getriebe, welches für eine erste Betriebsart über zumindest fünf Getriebestufen verfügt, welche mittels mehrerer Planetensätze (TE, TA, TU) realisiert sind,
- einem Antriebsaggregat, welches über eine Eingangswelle (E) und das Getriebe mit einer Ausgangswelle (A) in Antriebsverbindung steht,
- einem zusätzlichen elektrischen Antriebsaggregat (zweites elektrisches Antriebsaggregat 32),
wobei das Getriebe über ein Summengetriebe (TE) verfügt,
- welches in der ersten Betriebsart in den Kraftfluss zwischen Eingangswelle (E) und Ausgangswelle (A) zwischengeschaltet ist und
- mittels dessen in einer zweiten Betriebsart eine Überlagerung der Antriebsbewegung des Antriebsaggregates und des zweiten elektrischen Antriebsaggregates (32) erfolgt unter Herbeiführung einer stufenlosen Übersetzung der Antriebsbewegung der Eingangswelle (E) zu einem Abtriebselement (VE) des Summengetriebes (TE),
und wobei das Getriebe über ein zweites Teilgetriebe (TA, TU) verfügt,
- welches in der ersten Betriebsart in den Kraftfluss zwischen Eingangswelle (E) und Ausgangswelle (A) zwischengeschaltet ist und
- welches über zumindest zwei Fahrbereiche verfügt, in welchen in der zweiten Betriebsart eine Übergabe der Antriebsbewegung des Abtriebselementes (VE) an die Ausgangswelle (A) erfolgt.

2. Antriebsstrang gemäß Anspruch 1,
**dadurch gekennzeichnet, dass**
in einem ersten Fahrbereich der Abtrieb über ein Abtriebselement (VE) des Summengetriebes (TE) erfolgt und in einem zweiten Fahrbereich der Abtrieb über zwei Abtriebselemente (VE, HA) des Summengetriebes (TE) zum zweiten Teilgetriebe (TA) erfolgt.

3. Antriebsstrang gemäß Anspruch 1 oder 2,
**dadurch gekennzeichnet, dass**
zur Herstellung der Antriebsverbindung in der ersten und zweiten Betriebsart gemeinsame Schaltelemente Einsatz finden.

4. Antriebsstrang nach einem der Ansprüche 1 bis 3,
**dadurch gekennzeichnet, dass**
in der zweiten Betriebsart eine Umschaltung zwischen dem ersten Fahrbereich und dem zweiten Fahrbereich ohne Beschleunigung oder Verzögerung der trägen Massen erfolgt.

5. Antriebsstrang nach einem der vorhergehenden Ansprüche,
**dadurch gekennzeichnet, dass**
dem Antriebsstrang ein Steuergerät zugeordnet ist, welches eine Fahrstrategie beinhaltet, welche eine Ansteuerung der Schaltelemente und der Antriebsaggregate ermöglicht zur Auswahl einer Betriebsart.

6. Antriebsstrang nach Anspruch 5,
**dadurch gekennzeichnet, dass**
das Steuergerät zur Auswahl einer Betriebsart einen Ladezustand einer Batterie berücksichtigt.

7. Antriebsstrang nach Anspruch 5 oder 6,
**dadurch gekennzeichnet, dass**
das Steuergerät zur Auswahl einer Betriebsart zumindest einen Umgebungsparameter berücksichtigt.

8. Antriebsstrang nach einem der Ansprüche 5 bis 7,
**dadurch gekennzeichnet, dass**
das Steuergerät zur Auswahl einer Betriebsart einen Fahrzeugparameter berücksichtigt.

9. Antriebsstrang nach einem der Ansprüche 5 bis 8,
**dadurch gekennzeichnet, dass**
das Steuergerät zur Auswahl einer Betriebsart eine Bewegungsgröße des Fahrzeuges berücksichtigt.

10. Antriebsstrang nach einem der Ansprüche 5 bis 9,
**dadurch gekennzeichnet, dass**
das Steuergerät zur Auswahl einer Betriebsart zumindest eine von einem Fahrer abhängige Größe berücksichtigt.

11. Antriebsstrang nach einem der vorhergehenden Ansprüche,
**dadurch gekennzeichnet, dass**
das Schaltelemente (KE, KG) vorgesehen sind, mittels welcher das zusätzliche elektrische Antriebsaggregat (32) in einer Schaltstellung mit der Eingangswelle (E) in Antriebsverbindung bringbar ist und in einer Schaltstellung mit einem Getriebeelement (PTE) des Summengetriebes (TE) in Antriebsverbindung bringbar ist.

12. Antriebsstrang nach einem der vorhergehenden Ansprüche, **dadurch gekennzeichnet, dass**
ein weiteres elektrisches Antriebsaggregat (31) vorgesehen ist, mittels dessen eine unmittelbare Einspeisung eines Antriebsmomentes in eine Motorwelle (15) oder die Eingangswelle (E) möglich ist.

13. Antriebsstrang nach Anspruch 12,
**dadurch gekennzeichnet, dass**
dem Antriebsstrang ein Steuergerät zugeordnet ist, welches eine Ansteuerung der Schaltelemente und der Antriebsaggregate derart ermöglicht, dass ein Start des als Brennkraftmaschine ausgebildeten Antriebsaggregates wahlweise alleinig durch das zweite elektrische Antriebsaggregat (32) oder durch das erste elektrische Antriebsaggregat (31) und das zweite elektrische Antriebsaggregat (32) möglich ist.

14. Antriebsstrang nach einem der vorhergehenden Ansprüche,
**dadurch gekennzeichnet, dass**
eine Batterie mit dem zusätzlichen elektrischen Antriebsaggregat (32) verbunden ist, in welche in einem Generatorbetrieb des zusätzlichen elektrischen Antriebsaggregates (32) eine Rückspeisung von Energie des Antriebsstranges, des ersten elektrischen Antriebsaggregates (31) und/oder der Brennkraftmaschine erfolgt.

## Claims

1. Drive train comprising
- a gear unit which has at least five transmission stages for a first operating mode, which transmission stages are implemented by means of a plurality of planet sets (TE, TA, TU),
- a drive unit which has a drive connection to an output shaft (A) via an input shaft (E) and the gear unit,
- an additional electric drive unit (second electric drive unit 32),
the gear unit having a pick off gear unit (TE)
- which, in the first operating mode, is intermediately connected into the force flow between the input shaft (E) and output shaft (A), and
- by means of which, in a second operating mode, the drive movement of the drive unit and that of the second electric drive unit (32) are superimposed so as to bring about an infinitely variable transmission ratio of the drive movement of the input shaft (E) with respect to an output element (VE) of the pick off gear unit (TE),
and the gear unit having a second component transmission (TA, TU),
- which, in the first operating mode, is intermediately connected into the force flow between the input shaft (E) and output shaft (A), and
- which has at least two driving ranges in which, in the second operating mode, the drive movement of the output element (VE) is transferred to the output shaft (A).

2. Drive train according to Claim 1, **characterized in that** in a first driving range the output is carried out by means of an output element (VE) of the pick off gear unit (TE), and in a second driving range the output is carried out by means of two output elements (VE, HA) of the pick off gear unit (TE) with respect to the second component transmission (TA).

3. Drive train according to Claim 1 or 2, **characterized in that** common shifting elements are used to bring about the drive connection in the first and second operating modes.

4. Drive train according to one of Claims 1 to 3, **characterized in that** in the second operating mode switching over between the first driving range and the second driving range takes place without acceleration or deceleration of the inert masses.

5. Drive train according to one of the preceding claims, **characterized in that** a control unit which contains a driving strategy which permits the shifting elements and the drive units to be actuated in order to select an operating mode is assigned to the drive train.

6. Drive train according to Claim 5, **characterized in that** the control unit takes into account a charge state of a battery in order to select an operating mode.

7. Drive train according to Claim 5 or 6, **characterized in that** the control unit takes into account at least one ambient parameter in order to select an operating mode.

8. Drive train according to one of Claims 5 to 7, **characterized in that** the control unit takes into account a vehicle parameter in order to select an operating mode.

9. Drive train according to one of Claims 5 to 8, **characterized in that** the control unit takes into account a movement variable of the vehicle in order to select an operating mode.

10. Drive train according to one of Claims 5 to 9, **characterized in that** the control unit takes into account at least one variable which is dependent on a driver in order to select an operating mode.

11. Drive train according to one of the preceding claims, **characterized in that** shifting elements (KE, KG) are provided and can be used, in one shifted position, to bring about a drive connection of the additional electric drive unit (32) to the input shaft (E), and in one shifted position can bring about a drive connection to a transmission element (PTE) of the pick off gear unit (TE).

12. Drive train according to one of the preceding claims, **characterized in that** a further electric drive unit (31) is provided and can be used to feed a drive torque directly into an engine shaft (15) or the input shaft (E).

13. Drive train according to Claim 12, **characterized in that** a control unit is assigned to the drive train and permits the shifting elements and the drive units to be actuated in such a way that the drive unit which is embodied as an internal combustion engine can either be started solely by means of the second electric drive unit (32) or by means of the first electric drive unit (31) and the second electric drive unit (32).

14. Drive train according to one of the preceding claims, **characterized in that** a battery is connected to the additional electric drive unit (32) and energy of the drive train, of the first electric drive unit (31) and/or of the internal combustion engine is fed back into said battery in a generator operating mode of the additional electric drive unit (32).

## Revendications

1. Chaîne cinématique comportant
- une transmission, qui dispose d'au moins cinq étages de transmission pour un premier mode de fonctionnement, lesquels sont réalisés au moyen de plusieurs jeux de planétaires (TE, TA, TU),
- un groupe d'entraînement, lequel est en liaison d'entraînement avec un arbre de sortie (A) par l'intermédiaire d'un arbre d'entrée (E) et de la transmission,
- un groupe d'entraînement électrique supplémentaire (deuxième groupe d'entraînement électrique 32),
la transmission disposant d'un train d'engrenages totalisateur (TE),
- lequel, dans le premier mode de fonctionnement, est intercalé dans le flux de force entre l'arbre d'entrée (E) et l'arbre de sortie (A) et
- au moyen duquel, dans un deuxième mode de fonctionnement, une superposition du mouvement d'entraînement du groupe d'entraînement et du deuxième groupe d'entraînement électrique (32) a lieu en occasionnant une translation continue du mouvement d'entraînement de l'arbre d'entrée (E) sur un élément de sortie (VE) du train d'engrenages totalisateur (TE), et la transmission disposant d'une deuxième transmission partielle (TA, TU),
- laquelle, dans le premier mode de fonctionnement, est intercalée dans le flux de force entre l'arbre d'entrée (E) et l'arbre de sortie (A) et
- laquelle dispose d'au moins deux gammes de vitesses, dans lesquelles, dans le deuxième mode de fonctionnement, une restitution du mouvement d'entraînement de l'élément de sortie (VE) sur l'arbre de sortie (A) a lieu.

2. Chaîne cinématique selon la revendication 1,
**caractérisée en ce que**
dans une première gamme de vitesses, la sortie s'effectue par l'intermédiaire d'un élément de sortie (VE) du train d'engrenages totalisateur (TE) et, dans une deuxième gamme de vitesses, la sortie s'effectue par l'intermédiaire de deux éléments de sortie (VE,HA) du train d'engrenages totalisateur (TE) vers la deuxième transmission partielle (TA).

3. Chaîne cinématique selon la revendication 1 ou 2,
**caractérisée en ce que**
afin de produire la liaison d'entraînement dans les premier et le deuxième modes de fonctionnement, des éléments de commutation communs sont employés.

4. Chaîne cinématique selon l'une des revendications 1 à 3,
**caractérisée en ce que**
dans le deuxième mode de fonctionnement, une commutation de la première gamme de vitesses à la deuxième gamme de vitesses a lieu sans accélération ou décélération des masses inertes.

5. Chaîne cinématique selon l'une des revendications précédentes,
**caractérisée en ce que**
la chaîne cinématique est coordonnée à un appareil de commande, lequel contient une stratégie de conduite, laquelle permet une commande des éléments de commutation et des groupes d'entraînement afin de sélectionner un mode de fonctionnement.

6. Chaîne cinématique selon la revendication 5,
**caractérisée en ce que**
l'appareil de commande prend en compte un état de charge d'une batterie afin de sélectionner un mode de fonctionnement.

7. Chaîne cinématique selon la revendication 5 ou 6,
**caractérisée en ce que**
l'appareil de commande prend en compte au moins un paramètre environnemental afin de sélectionner un mode de fonctionnement.

8. Chaîne cinématique selon l'une des revendications 5 à 7,
**caractérisée en ce que**
l'appareil de commande prend en compte un paramètre du véhicule afin de sélectionner un mode de fonctionnement.

9. Chaîne cinématique selon l'une des revendications 5 à 8,
**caractérisée en ce que**
l'appareil de commande prend en compte une grandeur de mouvement du véhicule afin de sélectionner un mode de fonctionnement.

10. Chaîne cinématique selon l'une des revendications 5 à 9,
**caractérisée en ce que**
l'appareil de commande prend en compte au moins une grandeur dépendant d'un conducteur afin de sélectionner un mode de fonctionnement.

11. Chaîne cinématique selon l'une des revendications précédentes,
**caractérisée en ce que**
des éléments de commutation (KE,KG) sont prévus, au moyen desquels le groupe d'entraînement électrique supplémentaire (32) peut être amené en liaison d'entraînement dans une position de commutation avec l'arbre d'entrée (E) et peut être amené en liaison d'entraînement dans une position de commutation avec un élément de transmission (PTE) du train d'engrenages totalisateur (TE).

12. Chaîne cinématique selon l'une des revendications précédentes,
**caractérisée en ce que**
un groupe d'entraînement électrique supplémentaire (31) est prévu, au moyen duquel une entrée directe d'un couple d'entraînement dans un arbre de moteur (15) ou l'arbre d'entrée (E) est possible.

13. Chaîne cinématique selon la revendication 12,
**caractérisée en ce que**
un appareil de commande est coordonné à la chaîne cinématique, lequel permet une commande des éléments de commutation et des groupes d'entraînement de telle sorte qu'un démarrage du groupe d'entraînement réalisé comme un moteur à combustion interne soit possible au choix par l'intermédiaire uniquement du deuxième groupe d'entraînement électrique (32) ou par l'intermédiaire du premier groupe d'entraînement électrique (31) et du deuxième groupe d'entraînement électrique (32).

14. Chaîne cinématique selon l'une des revendications précédentes,
**caractérisée en ce que**
une batterie est reliée au groupe d'entraînement électrique supplémentaire (32), dans laquelle, pendant un fonctionnement comme générateur du groupe d'entraînement électrique supplémentaire (32), une alimentation en retour de l'énergie de la chaîne cinématique, du premier groupe d'entraînement électrique (31) et/ou du moteur à combustion interne a lieu.
